(19) Europäisches Patentamt
European Patent Office
Office européen des brevets

(11) **EP 3 372 808 B1**

(12) **EUROPEAN PATENT SPECIFICATION**

(45) Date of publication and mention
of the grant of the patent:
**05.08.2020 Bulletin 2020/32**

(51) Int Cl.:
**F02C 7/36** *(2006.01)*        **F02K 3/06** *(2006.01)*

(21) Application number: **18155676.2**

(22) Date of filing: **08.02.2018**

(54) **GEARED TURBOFAN**

GETRIEBETURBOFAN

TURBORÉACTEUR À ENGRENAGES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.03.2017 GB 201703521**

(43) Date of publication of application:
**12.09.2018 Bulletin 2018/37**

(60) Divisional application:
**20180132.1**

(73) Proprietor: **Rolls-Royce plc**
**London N1 9FX (GB)**

(72) Inventors:
• **Pointon, James**
**Derby, Derbyshire DE24 8BJ (GB)**

• **Bradbrook, Stephen**
**Derby, Derbyshire DE24 8BJ (GB)**

(74) Representative: **Rolls-Royce plc**
**Intellectual Property Dept SinA-48**
**PO Box 31**
**Derby DE24 8BJ (GB)**

(56) References cited:
**WO-A1-2015/048464      WO-A2-2015/050619**
**US-A1- 2016 061 051      US-A1- 2017 044 990**

• **ZIMBRICK R A ET AL: "INVESTIGATION OF VERY HIGH BYPASS RATIO ENGINES FOR SUBSONIC TRANSPORTS", JOURNAL OF PROPULSION AND POWER, AMERICAN INSTITUTE OF AERONAUTICS AND ASTRONAUTICS. NEW YORK, US, vol. 6, no. 4, 1 July 1990 (1990-07-01), pages 490-496, XP000136188, ISSN: 0748-4658**

**Description**

The present disclosure concerns a geared gas turbine engine with a ducted fan, sometime called a turbofan.

Gas turbine engines for powering aircraft are well known. In recent years geared gas turbine engines have been developed for small and medium size aircraft. Typically these include an epicyclic gearbox arranged in the star configuration in the low pressure shaft to reduce the speed of the fan relative to the turbine driving it. The star configuration has input drive via the rotating sun gear, output via the rotating ring gear and a set of planet gears which rotate about fixed axes.

One problem with such geared gas turbine engines is that they do not scale well to the gear ratios which are suitable for larger aircraft applications.

Each of WO15048464, WO15050619, US2016061051 and US2017044990 relates to a gas turbine engine having a speed reduction device between the turbine and the fan. The paper ZIMBRICK R A ET AL: "INVESTIGATION OF VERY HIGH BYPASS RATIO ENGINES FOR SUBSONIC TRANSPORTS", JOURNAL OF PROPULSION AND POWER, AMERICAN INSTITUTE OF AERONAUTICS AND ASTRONAUTICS , NEW YORK, US, vol. 6, no. 4, 1 July 1990 (1990-07-01), pages 490-496, XP000136188, ISSN: 0748-4658 relates to a study on high bypass gas turbine engines.

According to a first aspect there is provided a gas turbine engine according to claim 1.

The gear ratio of the epicyclic gearbox may be in the range 3.4 to 4.2. The high pressure compressor has between 9 and 11 stages of compression. This may be more stages of compression in the high pressure compressor than for a direct drive engine. Advantageously the number of stages of compression in the low pressure compressor is reduced. Advantageously the total number of stages of compression required to achieve a given overall pressure ratio is reduced.

Embodiments will now be described by way of example only, with reference to the Figures, in which:

> Figure 1 is a sectional side view of a geared gas turbine engine;
> Figure 2 is a schematic illustration of an epicyclic gearbox.

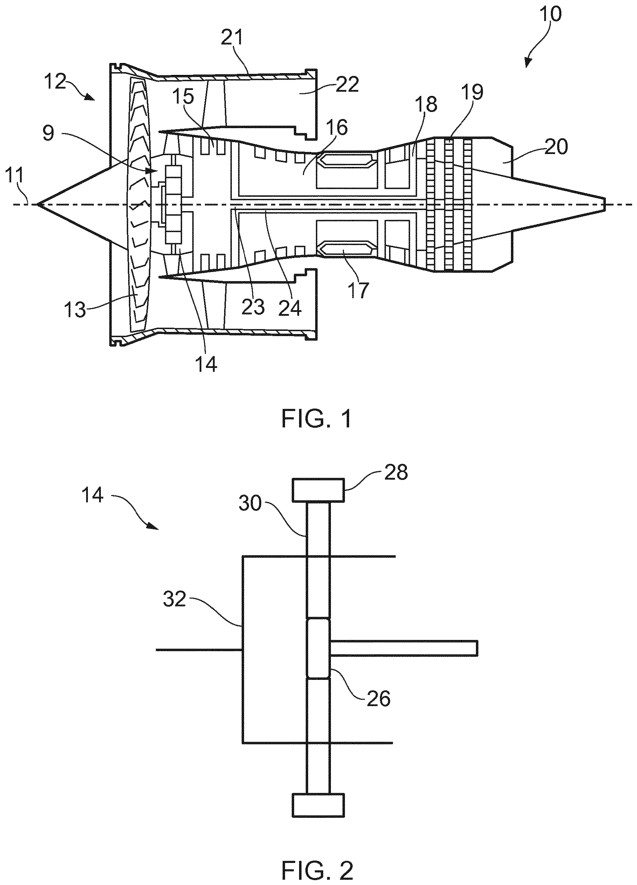

With reference to Figure 1, a gas turbine engine is generally indicated at 10, having a principal and rotational axis 11. The engine 10 comprises, in axial flow series, an air intake 12, a propulsive fan 13, a low pressure compressor 15, a high pressure compressor 16, combustion equipment 17, a high pressure turbine 18, a low pressure turbine 19 and a core exhaust nozzle 20. A nacelle 21 generally surrounds the engine 10 and defines the intake 12.

The gas turbine engine 10 works in the conventional manner so that air entering the intake 12 is accelerated by the fan 13 to produce two air flows: a first air flow into the core 9 of the engine, the low pressure compressor 15, the high pressure compressor 16 and downstream components, as a core flow; and a second air flow which passes through a bypass duct 22 to provide propulsive thrust as a bypass flow. The low pressure compressor 15 compresses the air flow directed into it before delivering that air to the high pressure compressor 16 where further compression takes place.

The compressed air exhausted from the high pressure compressor 16 is directed into the combustion equipment 17 where it is mixed with fuel and the mixture combusted. The resultant hot combustion products then expand through, and thereby drive, the high and low pressure turbines 18, 19 before being exhausted through the nozzle 20 to provide additional propulsive thrust. The high pressure turbine 18 drives the high pressure compressor 16 by an interconnecting shaft, high pressure shaft 24. The low pressure turbine 19 drives the low pressure compressor 15 and fan 13 by an interconnecting shaft, low pressure shaft 23. An epicyclic gearbox 14 is coupled between the low pressure shaft 23 and the fan 13 so that the fan 13 rotates more slowly than the low pressure turbine 19 which drives it. The low pressure compressor 15 may be on either side of the epicyclic gearbox 14. If it is on the same side as the fan 13 it may be referred to as a booster compressor.

Other gas turbine engines to which the present disclosure may be applied may have alternative configurations. By way of example such engines may have an alternative number of interconnecting shafts (e.g. three) and/or an alternative number of compressors and/or turbines.

The epicyclic gearbox 14 is shown in Figure 2. It comprises an externally toothed sun gear 26 and an internally toothed ring gear 28 which is concentric with the sun gear 26. An array of externally toothed planet gears 30, five as illustrated, are provided radially between the sun gear 26 and the ring gear 28. The teeth of the planet gears 30 intermesh with the teeth of the sun gear 26 and the ring gear 28. The planet gears 30 are held in fixed relationship to each other by a planet carrier 32. Each planet gear 30 is mounted to the planet carrier 32 by a bearing, for example a journal bearing, so that it is free to rotate about its own axis but cannot move relative to the planet carrier 32.

The epicyclic gearbox 14 is arranged in planetary configuration. Thus the drive input from the low pressure turbine 19 is received into the sun gear 26 and the drive output to the fan 13 is delivered from the planet carrier 32. The ring gear 28 is held stationary, not rotating. Thus when drive is delivered to the sun gear 26 the interaction of the teeth causes the planet gears 30 to rotate about their own axes and to precess (orbit) around the inside of the ring gear 28. The movement of the planet gears 30 around the ring gear 28 causes the planet carrier 32 to rotate.

One advantage of a planetary configuration for the epicyclic gearbox 14 is that the gear reduction and power transfer is greater than for an equivalent sized epicyclic gearbox in star configuration. Advantageously it is therefore lighter and/or more power-dense. Beneficially the planetary configuration is more suitable for large engines 10 than the star configuration.

An exemplary gas turbine engine 10 is configured to produce thrust of at least 156kN (35,000lbf) at sea-level static ISA (international standard atmosphere) take-off conditions. Another exemplary gas turbine engine 10 is configured to produce thrust of up to 578kN (130,000lbf) at sea-level static ISA take-off conditions. References to thrust levels herein are to thrust at sea-level static ISA take-off conditions. Such gas turbine engines 10 benefit from a larger bypass ratio, which is the ratio of mass flow through the bypass duct 22 to mass flow through the core 9. In an exemplary gas turbine engine 10 the bypass duct 22 has larger diameter than an equivalent direct drive engine (having no gearbox between the low pressure turbine 19 and the fan 13) and/or a smaller diameter core 9. Therefore the mass flow through the bypass duct 22 is greater than for an equivalent direct drive engine and/or the mass flow through the core 9 is less than for an equivalent direct drive engine. For example the bypass ratio may be greater than 13. In some engines 10 the bypass ratio may be up to 25. Such engines 10 may be referred to as "ultra high" or "very high" bypass ratio engines. In other engines 10 the bypass ratio may be up to 17. There may be a correlation between the amount of thrust produced by the engine 10 and the bypass ratio. For example a gas turbine engine 10 configured to produce 156kN (35,000lbf) may have a bypass ratio as low as 13 whereas a gas turbine engine 10 configured to produce 578kN (130,000lbf) may have a bypass ratio in the range of 17 to 25.

In order to achieve the high thrust and/or high bypass ratio it is necessary for the fan 13 to have a large diameter. In an exemplary gas turbine engine 10 the fan 13 has a diameter of greater than or equal to 216 cm (85 inches). In other exemplary gas turbine engines 10 the fan 13 has a diameter of up to 432 cm (170 inches). In still other exemplary gas turbine engines 10 the fan 13 has a diameter in the range of 241 cm (95 inches) to 381 cm (150 inches). Smaller diameters within these ranges are more suitable for lower thrust and bypass ratio engines 10 whereas larger fan diameters are more suitable for the higher end of the thrust range and bypass ratios.

Many parameters in a gas turbine engine 10 are stated at mid-cruise conditions. Mid-cruise is flight at 35,000ft at 0.85 Mach number, ISA. Mid-cruise thrust may be 10% to 20% of the sea-level static ISA take-off thrust. The following parameters used herein are stated at mid-cruise conditions: fan tip loading, fan entry mean flow Q, specific thrust, overall pressure ratio and high pressure compressor pressure ratio.

The overall pressure ratio of the gas turbine engine 10 is defined as the product of the pressure ratios across the fan 13, low pressure compressor 15 and high pressure compressor 16. In an exemplary gas turbine engine 10 having an epicyclic gearbox 14 in planetary configuration the overall pressure ratio is in the range 40 to 80. In another exemplary gas turbine engine 10 the overall pressure ratio is in the range 45 to 70. An overall pressure ratio towards the lower end of the ranges may be suitable for a gas turbine engine 10 providing lower levels of thrust, for example 156kN (35,000lbf), having a smaller diameter fan 13, for example around 216 cm to 241 cm (85 to 95 inches) diameter, or having a lower bypass ratio, for example around 13. Conversely an overall pressure ratio towards the upper end of the ranges may be suitable for a gas turbine engine 10 providing higher levels of thrust, for example 578kN (130,000lbf), having a large diameter fan, for example 381 cm to 432 cm (150 to 170 inches) diameter, or having a high bypass ratio, for example 17 to 25.

The gear ratio of the epicyclic gearbox 14 is calculated from the speed reduction from the input to the output shafts. In the planetary configuration it is the input speed to the sun gear 26 from the low pressure shaft 23 compared to the output speed to the fan 13 from the planet carrier 32. In an exemplary gas turbine engine 10 the gear ratio of the epicyclic gearbox 14 is at least 3. In another exemplary gas turbine engine 10 the gear ratio is at least 3.4. In an exemplary gas turbine engine 10 the gear ratio of the epicyclic gearbox 14 may be as large as 5. In another exemplary gas turbine engine 10 the gear ratio may be up to 4.2. Smaller gear ratios, for example around 3 to 3.4, may be suitable for a gas turbine engine 10 providing around 156kN (35,000lbf) or having a fan 13 with a diameter of 216 cm to 241 cm (85 to 95 inches) or having a bypass ratio around 13. Larger gear ratios, for example around 4.2 to 5, may be more suitable for a gas turbine engine 10 providing up to 578kN (130,000lbf) or having a very large diameter fan 13 (for example 381 cm to 432 cm 1(50 to 170 inches)) or having a very high bypass ratio (for example 17 to 25).

The high pressure compressor 16 is formed of a plurality of rotating bladed rotors which are axially interspersed with annular arrays of stators. Compression occurs at each rotor stage. Compression may also apply at each stator stage. The high pressure compressor 16 may have between 8 and 12 stages of compression. In other examples the high pressure compressor 16 may have between 9 and 11 stages of compression.

The pressure ratio of the high pressure compressor 16 is defined as the ratio of pressure exiting the high pressure compressor 16 relative to the pressure entering the high pressure compressor 16. In an exemplary gas turbine engine 10 the pressure ratio of the high pressure compressor 16 may be in the range 10 to 30. In another exemplary gas turbine engine 10 the pressure ratio of the high pressure compressor 16 may be in the range 12 to 25. Lower pressure ratios, for example around 10 to 12, may be suitable for a gas turbine engine 10 providing around 156kN (35,000lbf) or having a fan 13 with a diameter of 216 cm to 241 cm (85 to 95 inches) or having a bypass ratio around 13. Larger pressure ratios, for example around 25 to 30, may be more suitable for a gas turbine engine 10 providing up to 578kN (130,000lbf) or having a very large diameter fan 13 (for example 381 cm to 432 cm (150 to 170 inches)) or having a very high bypass ratio (for example 17 to 25).

Fan tip loading is calculated from the change in enthalpy in the bypass flow across the fan 13 divided by the rotational velocity at the fan tip squared. Mathematically: $\Delta H / U^2$. In an exemplary gas turbine engine 10 the fan tip loading is in the range 0.25 to 0.4, which is a dimensionless ratio. In another exemplary gas turbine engine 10 the fan tip loading is in the range 0.27 to 0.36.

Specific thrust is defined as the total thrust divided by the airflow into the engine 10. In an exemplary gas turbine engine 10 the specific thrust is in the range 69 to 98 Nkg$^{-1}$s (7 to 10 lbf/lbm.s). In another exemplary gas turbine engine 10 the specific thrust is in the range 78 to 93 Nkg$^{-1}$s (8 to 9.5 lbf/lbm.s). Advantageously a lower specific thrust improves propulsive efficiency and reduces specific fuel consumption (an indication of the amount of fuel burnt per unit of thrust produced). The specific thrust may be lower than for a direct drive gas turbine engine.

The gas turbine engine 10 described finds utility to power an aircraft, particularly a large passenger or cargo aircraft. Such an aircraft may be powered by more than one gas turbine engine 10, for example two or four engines 10 may power an aircraft.

It will be understood that the invention is not limited to the embodiments above-described and various modifications and improvements can be made without departing from the concepts described

## Claims

1. A gas turbine engine (10) comprising:

   • a low pressure turbine (19);
   • a fan (13) drivable by the low pressure turbine (19);
   • a high pressure turbine (18) and a high pressure compressor (16) coupled by a high pressure shaft (24);
   • an epicyclic gearbox (14) in planetary configuration coupled between the low pressure turbine (19) and the fan (13);
   • the fan (13) having a diameter greater than or equal to 241 cm (95 inches) and less than or equal to 381 cm (150 inches);
   • the gear ratio is in the range 3 to 5; and
   • the high pressure compressor (16) has between 9 and 11 stages of compression.

2. A gas turbine engine (10) as claimed in claim 1, wherein the gear ratio is in the range 3.4 to 4.2.

## Patentansprüche

1. Gasturbinenmotor (10), umfassend:

   • eine Niederdruckturbine (19);
   • einen Fan (13), der durch die Niederdruckturbine (19) angetrieben werden kann;
   • eine Hochdruckturbine (18) und einen Hochdruckkompressor (16), die über eine Hochdruckwelle (24) gekoppelt sind;
   • ein Umlaufgetriebe (14) in einer Planetenkonfiguration, das zwischen die Niederdruckturbine (19) und den Fan (13) geschaltet ist;
   • wobei der Fan (13) einen Durchmesser von größer oder gleich 241 cm (95 Zoll) und kleiner oder gleich 381 cm (150 Zoll) aufweist;
   • wobei das Übersetzungsverhältnis im Bereich von 3 bis 5 liegt; und
   • wobei der Hochdruckkompressor (16) 9 bis 11 Kompressionsstufen aufweist.

2. Gasturbinenmotor (10) nach Anspruch 1, wobei das Übersetzungsverhältnis im Bereich von 3,4 bis 4,2 liegt.

## Revendications

1. Moteur de turbine à gaz (10) comprenant :

   • une turbine basse pression (19) ;
   • une soufflante (13) pouvant être entraînée par la turbine basse pression (19) ;
   • une turbine haute pression (18) et un compresseur haute pression (16) accouplés par un arbre haute pression (24) ;
   • un réducteur épicycloïdal (14) en configuration planétaire accouplé entre la turbine basse pression (19) et la soufflante (13) ;
   • la soufflante (13) ayant un diamètre supérieur ou égal à 241 cm (95 pouces) et inférieur ou égal à 381 cm (150 pouces) ;
   • le rapport de transmission étant compris entre 3 et 5 ; et
   • le compresseur haute pression (16) ayant entre 9 et 11 étages de compression.

2. Moteur de turbine à gaz (10) selon la revendication 1, le rapport de démultiplication pouvant être commandé électroniquement dans la plage comprise entre 3,4 et 4,2.

FIG. 1

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 15048464 A
- WO 15050619 A
- US 2016061051 A
- US 2017044990 A

**Non-patent literature cited in the description**

- INVESTIGATION OF VERY HIGH BYPASS RATIO ENGINES FOR SUBSONIC TRANSPORTS. **ZIMBRICK R A et al.** JOURNAL OF PROPULSION AND POWER. AMERICAN INSTITUTE OF AERONAUTICS AND ASTRONAUTICS, 01 July 1990, vol. 6, 490-496